# EUROPÄISCHE PATENTSCHRIFT

(11) **EP 3 775 764 B1**
(45) Veröffentlichungstag und Bekanntmachung des Hinweises auf die Patenterteilung: **09.03.2022**
(21) Anmeldenummer: 19726892.3
(22) Anmeldetag: 26.03.2019
(51) Int. Cl.: G01B 11/25, G01S 17/86, G01S 17/87, G01S 17/89, G06Q 10/00, G01N 21/88

(54) **FAHRZEUGERFASSUNGSSYSTEM**
VEHICLE DETECTION SYSTEM
SYSTÈME DE DÉTECTION DE VÉHICULE

(30) Priorität: 29.03.2018 DE 102018002621; 29.03.2018 DE 202018001659 U
(43) Veröffentlichungstag der Anmeldung: 17.02.2021
(73) Patentinhaber: Twinner GmbH, 06112 Halle (Saale) (DE)
(72) Erfinder: BUGOVICS, Jozsef, 04109 Leipzig (DE)
(74) Vertreter: Weihrauch, Frank
(86) Internationale Anmeldenummer: PCT/DE2019/000082
(87) Internationale Veröffentlichungsnummer: WO 2019/185075

(56) Entgegenhaltungen:
- EP-A1- 1 464 920
- DE-A1-102015 204 473
- FR-A1- 2 945 619

## Beschreibung

Die Erfindung betrifft ein Fahrzeugerfassungssystem zur Erzeugung eines n-dimensionalen digitalen Abbilds des zu erfassenden Fahrzeugs.

Aus dem Stand der Technik ist es dem Grunde nach bekannt, Fahrzeuge nach speziellen Parametern, beispielsweis zur Ermittlung ihrer äußeren Geometrie oder fotografisch, zu erfassen.

Hierzu zeigt beispielsweise DE 20 2013 000 050 U1 eine Lösung, bei der an die Grundform eines Fahrzeugs angepasste Scannerarme zur Erfassung der Oberfläche des Fahrzeugs linear verfahrbar und zugleich schwenkbar angeordnet sind. Gemäß der Aufgabenstellung ist somit eine dreidimensionale Oberfläche erfassbar. Nicht dafür ausgelegt ist diese Vorrichtung, zugleich Eigenschaften unterschiedlicher Kategorien zu ermitteln oder unterschiedliche Oberflächenarten messbar zu erfassen.

Die Aufgabe der Erfindung ist es, eine störunanfällige und einfach zu bedienende Lösung aufzuzeigen, ein Fahrzeug mit möglichst geringem Personalaufwand komplex zu erfassen.

Die Aufgabe wird durch die im Schutzanspruch 1 aufgeführten Merkmale gelöst. Bevorzugte Weiterbildungen ergeben sich aus den Unteransprüchen.

Das erfindungsgemäße Fahrzeugzustandserfassungssystem weist als Grundbestandteile eine Fahrzeugpositionierungseinheit, eine Objekterfassungseinheit und eine Auswertungseinheit auf.

Die Fahrzeugpositionierungseinheit weist eine Plattform und eine Plattformpositionserfassungseinheit auf.

Die Plattform ist nach Größe und Belastbarkeit so ausgebildet, dass ein Fahrzeug aufstellbar ist. Das Fahrzeug selbst ist nicht Bestandteil der erfindungsgemäßen Vorrichtung. Als Fahrzeuge in diesem Sinne werden Landfahrzeuge, insbesondere Personenkraftwagen, verstanden. Die Plattform ist drehbar ausgebildet. Die Drehachse der Plattform entspricht der Vertikalachse des aufgestellten Fahrzeugs, so dass die Plattform im Wesentlichen waagerecht angeordnet ist. Die Plattform entspricht damit vorzugsweise der Bauform eines Drehtellers.

Die Plattformpositionserfassungseinheit ist so ausgebildet, dass mit ihr Plattformpositionsdaten erfassbar sind. Die Plattformpositionsdaten beschreiben die Winkelstellung der rotierbaren Plattform und damit mittelbar die Winkelstellung des aufgesteliten Fahrzeugs. Wird die Plattform während eines Erfassungsvorgangs gedreht, können so Objektpunkte des Fahrzeuges, die bei unterschiedlichen Winkelstellungen unterschiedliche Koordinaten im Raum aufweisen, einander zugeordnet werden. Die Plattformpositionsdaten werden für die Übertragung an die Auswertungseinheit übertragbar bereitgestellt. Für die Übertragung der Plattformpositionsdaten sind die Fahrzeugpositionierungseinheit und die Auswertungseinheit miteinander datenverbunden.

Die Objekterfassungseinheit weist Einzelerfassungssysteme auf. Erfindungsgemäß weist die Objekterfassungseinheit mindestens zwei Einzelerfassungsysteme aus einer Gruppe bestehen aus:
- 3-D Kamera-Erfassungssystem
- Bildkamera-Erfassungssystem
- Infrarot-Erfassungssystem
- Lasertriangulation-Erfassungssystem
- Musterprojektion-Erfassungssystem
- Deflektometrie-Erfassungssystem
auf.

Alle Einzelerfassungssysteme stellen Raumkoordinatendaten von Objektpunkten des Fahrzeugs bereit, Die Raumkoordinatendaten aller Einzelerfassungssysteme der Objekterfassungseinheit sind auf ein und dasselbe Raumkoordinatensystem bezogen. Hierzu werden die Einzelerfassungssysteme in dasselbe Raumkoordinatensystem kalibriert. Dieses wird nachfolgend auch als das einheitliche Raumkoordinatensystem bezeichnet.

Vorzugsweise weist die Objekterfassungseinheit mehr als zwei der aufgeführten Einzeierfassungssysteme, vorzugsweise mindestens drei der Einzelerfassungssysteme, besonders bevorzugt mehr als drei der Einzelerfassungssysteme, auf.

Als 3-D Kamera-Erfassungssystem werden insbesondere Tiefenkamerasysteme, die als TOF (Time of Flight) - Systeme ausgebildet sind, und Stereokamerasysteme verstanden. Mit 3-D Kamera-Erfassungssystemen sind Raumkoordinaten von Objektpunkten als Objektdaten erfassbar.

Bei den Bildkamerasystemen handelt es sich vorzugsweise um Farbbildkamerasysteme, so dass Helligkeits- und Farbwerte von Objektpunkten als Objektdaten erfassbar sind. Auf diese Weise ist insbesondere das äußere Erscheinungsbild des Fahrzeugs erfassbar.

Infrarot-Erfassungsysteme basieren auf der Thermografie und weisen Infrarotkameras auf, welche die Infrarotstrahlung, die von einem Objektpunkt emittiert wird, als Objektdaten empfängt. Das Infrarot-Erfassungssystem kann dabei passiv, also ohne vorherige Beaufschlagung des Fahrzeugs mit Infrarotstrahlung, als auch aktiv, also mit vorheriger Beaufschlagung des Fahrzeugs mit Infrarotstahlung, erfolgen. Mittels eines Infrarot-Erfassungssystems können unter der Oberfläche des Fahrzeuglacks befindliche Beschädigungen und insbesondere Überlackierungen erkannt werden.

Ein Lasertriangulation-Erfassungssystem projiziert einen Laserpunkt auf die Fahrzeugoberfläche und weist eine von der Laserquelle beabstandete Kamera zur optischen Erfassung des Laserpunkts auf, wobei der Winkel des Laserpunktes trigonometrisch ausgewertet wird und sich somit der Abstand des Objektpunktes, der dem Laserpunkt entspricht, ermitteln lässt. Somit lassen sich komplementär zu einem 3-D-Kamera-Erfassungssystem Raumkoordinaten von Objektpunkten des Fahrzeugs als Objektdaten erfassen.

Ein Musterlichtprojektion-Erfassungssystem, auch als Musterprojektion bezeichnet, projiziert ein Lichtmuster auf die Fahrzeugoberfläche. Ein wichtiges Beispiel ist die Streifenlichtprojektion. Möglich sind aber beispielsweise auch Punktmuster, Ein Streifenlichtprojektion-Erfassungssystem projiziert einen Lichtstreifen auf die Fahrzeugoberfläche. Die von dem Streifenprojektor beabstandete Kamera erfasst die projizierten Lichtstreifen. Es werden anhand des Winkels und trigonometrischer Auswertung die Raumkoordinatendaten der Punkte der Lichtstreifen bestimmt. Wie bei der Lasertriangulation lassen sich auch hier komplementär zu einem 3-D-Kamera-Erfassungssystem Raumkoordinaten von Objektpunkten des Fahrzeugs als Objektdaten erfassen.

Mittels eines Deflektometrie-Erfassungssystems werden die Spiegelbilder bekannter Muster ausgewertet, um die Form einer Objektoberfläche zu bestimmen. Ein Deflektometrie-Erfsssungssystem eignet sich für spiegelnde Oberflächen. Mittels eines Deflektometrie-Erfassungssystems lassen sich somit Raumkoordinatendaten von Objektpunkten der Scheiben oder anderer Hochglanzoberflächen des Fahrzeugs wie Chromzierelementen als Objektdaten erfassen.

Jedes der Einzelerfassungssysteme weist einen Erfassungsbereich auf. Der Erfassungsbereich umfasst zumindest abschnittsweise das Fahrzeug. Die Erfassungsbereiche der Einzelerfassungssysteme überlagern sich und bilden einen gemeinsamen Erfassungsbereich aus. Die Plattform ist so positioniert, dass sich ein aufgestelltes Fahrzeug zumindest abschnittsweise in dem gemeinsamen Erfassungsbereich befindet.

Mittels der Fahrzeugpositionierungseinheit wird das Fahrzeug gedreht. Dabei erfolgt eine sequentielle Durchführung von Erfassungsvorgängen, so dass Erfassungen in einer Vielzahl unterschiedlicher Winkelstellungen der Plattform und damit des Fahrzeugs durchgeführt werden.

Ferner weist die Objekterfassungseinheit eine Positionierungseinheit auf. Die Positionierungseinheit stellt eine feste Lagebeziehung der Einzelerfassungssysteme zueinander sowie der Einzelerfassungssysteme zu der Fahrzeugpositionierungseinheit her. Es handelt sich vorzugsweise um ein Gestell oder einen Rahmen. Die Positionierungseinheit kann auch durch eine Umhausung ausgebildet sein.

Ferner sind Markierungen in dem gemeinsamen Erfassungsbereich angeordnet, um ein Kalibrieren der Einzelerfassungssysteme in dasselbe einheitliche Rau mkoordinatensystem zu ermöglichen. Vorzugsweise sind die Markierungen an der Innenseite einer Umhausung angebracht.

Die Objekterfassungseinheit ist ferner dadurch gekennzeichnet, dass mittels jedem der mindestens zwei Einzelerfassungssysteme Objektdaten von Objektpunkten des Fahrzeugs erfassbar und an die Auswertungseinheit übertragbar bereitstellbar sind. Die Objektdaten enthalten, teilweise zusätzlich, Koordinatendaten der Objektpunkte. Die Koordinatendaten können dabei je nach Einzelerfassungssystem als Raumkoordinantendaten (x, y, z) oder als Flächenkoordinatendaten (x, y) vorliegen.

Die Auswertungseinheit weist Einzelauswertungsmodule, ein Gesamtbewertungsmodul sowie eine Generierungsmodul auf.

Die Auswertungseinheit erhält die Objektdaten von der Objekterfassungseinheit sowie die Plattformpositionsdaten von der Fahrzeugspositionierungseinheit.

Die Auswertungseinheit weist für jedes Einzelerfassungssystem ein Einzelbewertungsmodul auf. Das jeweilige Einzelbewertungsmodul führt eine Bewertung einer Erfassungsqualität der Objektdaten durch. Es führt dabei die Bewertung der Objektdaten durch, die an einem definierten Koordinatenpunkt bei einem definierten Erfassungswinkel vorliegen. Der Koordinatenpunkt wird durch die Koordinatendaten des Einzelerfassungssystems und der Erfassungswinkel durch die Plattformpositionsdaten definiert. Auf der Grundlage der Bewertung erfolgt eine Vorkategorisierung dieser Objektdaten anhand eines einstellbaren Qualitätswertes. Erreichen die Objektdaten den einstellbaren Qualitätswert, erfolgt eine Vorkategorisieru ng als verwertbare Objektdaten. Unterschreiten die Objektdaten den Qualitätswert, erfolgt eine Vorkategorisierung als nicht verwertbare Objektdaten. Der einstellbare Qualitätswert kann beispielsweise durch zulässige Abweichungen von benachbarten Objektpunkten festgelegt werden.

Die Objektdaten aus dieser Erfassung zu diesem bestimmten Objektpunkt fließen in die Gesamtbewertung aus allen Erfassungen zu diesem Objektpunkt sowohl in Bezug auf alle Erfassungswinkel als auch in Bezug auf alle Dimensionen ein. Als Dimension wird jeweils eine Art von Objektdaten und von so gewonnenen Informationen verstanden.

Die Bewertung durch das Einzelbewertungsmodul erfolgt also für jeden Objektpunkt und für jeden zu diesem Objektpunkt durchgeführten Einzelerfassungsvorgang.

Das Einzelbewertungsmodul wird dabei als funktionale Kategorie verstanden, so dass eine sequentielle Abarbeitung der Objektdaten unterschiedlicher Einzelerfassungssysteme durch dieselbe Einheit mit nachfolgender Zwischenspeicherung ebenfalls als jeweils ein Einzelbewertungsmodul je Einzelerfassungssystem verstanden wird. Die Erfassungen der unterschiedlichen Einzelerfassungssysteme und die nachfolgenden Bewertungen der Objektdaten durch Einzelbewertungsmodule können, je nach konkreter Ausbildung, auch parallel erfolgen.

Die verwertbaren Objektdaten werden von den Einzelbewertungsmodulen an das Gesamtbewertungsmodul übertragbar bereitgestellt.

Durch das Gesambewertungsmodul werden anhand der Koordinatendaten zu den Objektpunkten die verwertbaren Objektdaten aus den Einzelbewertungsmodulen und damit aus den Einzelerfassungssystemen einander zugeordnet.

Das Gesamtbewertungsmodul ist so ausgebildet, dass ein Vergleich des Qualitätswertes der verwertbaren Objektdaten eines Einzelerfassungssystems mit dem Qualitätswert der verwertbaren Objektdaten eines weiteren Einzelerfassungssystems durchführbar ist. Auf dieser Grundlage ist eine objektpunktbezogene Rangkategorisierung der verwertbaren Objektdaten der Einzelerfassungssysteme in Abhängigkeit von dem Qualitätswert als primäre Objektdaten und als sekundäre Objektdaten durchführbar. Die Objektdaten zu einem bestimmten Objektpunkt mit dem höchsten Qualitätswert werden als primäre Objektdaten rangkategorisiert. Objektdaten zu diesem bestimmten Obbjektpunkt mit einem niedrigeren Qual itätswert werden als sekundäre Objektdaten rangkategorisiert. Dabei können zu einem Objektpunkt mehrere sekundäre Objektdaten aus mehreren Einzelerfassungssystemen bestehen, während primäre Objektdaten zu einem Objektpunkt nur einmal vorliegen können. Die primären Objektdaten und die sekundären Objektdaten werden dem Generierungsmodul übertragbar zur Verfügung gestellt.

Der Rangkategorisierung liegt also eine Bewertung der Qualität der Objektdaten anhand des Qualitätswerts zu Grunde. Die Bewertung der Qualität kann absolut oder relativ zu der erfassten Datenqualität der Objektdaten erfolgen. Dabei sind neben diskreten Algorithmen auch Algorithmen verwendbar, die eine "n - zu - n" Relation in die Qualitätsbewertung mit eingeziehen. Damit ist es möglich, bei einer geringen Qualität der Objektdaten aus einer Einzelerfassung durch die Nutzung der Objektdaten aus mehreren Erfassungswinkeln und durch die Nutzung der Objektdaten aus mehreren unterschiedlichen Einzelerfassungssystemen jeweils zu demselben Objektpunkt die resultierende Qualität der Objektdaten dennoch zu steigern.

Soweit gemäß einer bevorzugten Variante mindestens drei Einzelerfassungssysteme vorhanden sind und jeweils Objektdaten bereitstellen, kann das Gesamtbewertungsmodul eine Plausibilitätskontrolle in der Weise durchführen, dass ein Vergleich der zu einem bestimmten Objektpunkt erfassten Objektdaten aus den mindestens drei Einzelerfassungssystemen durchgeführt wird und dass ab einem einstellbaren Abweichungsgrad der Objektdaten eines ersten Einzelerfassungssystems von den Objektdaten der weiteren mindestens zwei Einzelerfassungssysteme die Objektdaten des ersten Einzelerfassungssystems verworfen und nicht weiter dem Generierungsmodul übertragbar zur Verfügung gestellt werden.

Das Generierungsmodul ist so ausgebildet, dass es die Koordinatendaten aus den Objektdaten der Einzelerfassungsysteme unter Einbeziehung der Plattformpositionsdaten einem einheitlichen Raumkoordinatensystem zuordnet. Bei unterschiedlichen Winkelstellungen der Plattform liegen unterschiedliche Koordinatendaten der Objektdaten ein und des selben Objektpunktes des Fahrzeugs vor. Trotzdem kann eine eindeutige Zuordnung aller Objektdaten, die sich auf ein und den selben Objektpunkt beziehen, auf diesen Objektpunkt erfolgen, da der Auswertungseinheit zusätzlich die Plattformkoordinatendaten bekannt sind. Auf der Grundlage der primären Objektdaten wird zunächst ein digitales Basisabbild des Fahrzeugs in dem einheitlichen Raumkoordinatensystem erzeugt. Die primären Objektdaten weisen somit eine Leitfunktion auf.

Das so erzeugte digitale Basisabbild beruht zunächst nur auf den Koordinatendaten sowie den weiteren Daten aus den primären Objektdaten.

Das digitale Basisabbild des Fahrzeugs wird von dem Generierungsmodul nun durch Hinzufügung der sekundären Objektdaten anhand der Koordinatendaten zu einem digitalen Abbild des Fahrzeugs ergänzt. Das digitale Abbild wird ausgebbar bereitgestellt.

Das Fahrzeugzustandserfassungssystem ermöglicht als besonderen Vorteil die Erzeugung eines einheitlichen digitalen Abbilds eines Fahrzeugs auf der Basis von mehreren Einzelerfassungssystemen.

Es liegen somit zu jeweils ein und demselben Objektpunkt Objektdaten aus unterschiedlichen Einzelerfassungssystemen vor, was auch als Multi-Layer-Information bezeichnet wird.

Dabei können sich vorteilhaft die Einzelerfassungssysteme zum einen wechselseitig unterstützen. Dies kann insbesondere bei der Ermittlung der Raumkoordinatendaten der Fall sein, indem für die opaken Abschnitte des Fahrzeugs, wie beispielsweise die lackierte Oberfläche, beispielsweise die Objektdaten aus einem 3-D-Kamera-Erfassungssystem und für die verglasten Abschnitte des Fahrzeugs, wie die Scheiben, beispielsweise die Objektdaten aus einem Deflektometrie-Erfassungssystem herangezogen werden. Vorteilhaft ist zudem, dass das Fahrzeugzustandserfassungssystem die Qualität und damit die Verwertungseignung der Objektdaten aus unterschiedlichen Einzelerfassungssystemen selbstständig erkennt und jeweils die Objektdaten verwendet, die eine höhere Qualität des digitalen Abbilds bewirken.

Ferner können die Objektdaten der Einzelerfassungssysteme in kumulativer Zuordnung zueinander stehen, indem beispielsweise die Objektdaten aus einem Bildkamera-Einzelsystem um die Objektdaten aus einem Infrarot-Einzelsystern ergänzt werden, und so verdeckte Beschädigungen, die überlackiert wurden, erkennbar gemacht werden. Ein Objektpunkt kann so beispielsweise als überlackierte Darstellung gezeigt werden und es kann an demselben Objektpunkt gleichzeitig die Oberfläche unter dem Lack dem Betrachter offenbart werden.

Ferner ermöglicht das digitale Abbild es als weiteren Vorteil, das Fahrzeug in verschiedenen Ansichten, beispielsweise mit geschlossenen oder geöffneten Türen sowie in verschiedenen Perspektiven, beispielsweise als 360°-Ansicht, darzustellen.

Ein besonderer Vorteil liegt darin, dass im Ergebnis ein digitales Abbild des Fahrzeugs erlangbar ist, das eine ausreichende Datenbasis insbesondere für folgende zwei wichtige Anwendungen aufweist.

Zum ersten ist das digitale Abbild geeignet, um Fahrzeugbeschädigungen zu erfassen und hieraus automatisiert erforderliche Reparaturmaßnahmen unter Spezifizierung benötigter Ersatzteile und erforderlicher Arbeitsschritte sowie daraus abgeleitet der Reparaturkosten zu bestimmen, wobei alles in digitaler Form erfo Igen kann.

Zum zweiten kann durch Weiterverarbeitung des digitalen Abbilds automatisiert eine Fahrzeugbewertung erfolgen, um beispielsweise einen Fernabsatz von gebrauchten Fahrzeugen zu unterstützen. Bei der Fahrzeugbewertung sind zusätzliche Daten wie Fahrzeugalter, Laufleistung, Anzahl der Vorbesitzer und weitere wertbestimmende Faktoren in die automatisierte Berechnung des Fahrzeugwerts einbeziehbar.

Von besonderem Vorteil sind die Manipulationssicherheit und die zuverlässige Dokumentation einer Fahrzeugbeschädigungserfassung oder einer Fahrzeugbewertung.

Ein weiterer Vorteil liegt in der Modularität des Fahrzeugerfassungssystems. Je nach Bedarf, also je nach Qualitätsvorgabe oder nach besonderem Erfassungsziel kann das Fahrzeugsystem mit unterschiedlichen Einzelerfassungseinheiten aus der genannten Gruppe bestückt werden.

Zusammengefasst beruht das Fahrzeugerfassungssystem insbesondere darauf, dass alle Sensoren, vorliegend als Einzelerfassungssysteme bezeichnet, auf ein und dasselbe Koordinatensystem kalibriert sind. Dabei ist die Anzahl und die Art der Sensoren variabel und prinzipbedingt nicht begrenzt. Die Sensoren erfassen Objektdaten dabei bereits insofern mehrfach, weil eine Erfassung in unterschiedlichen Winkelpositionen infolge der Drehbewegung des Fahrzeugs auf der Plattform erfolgt. Ferner erfolgt die Erfassung aufgrund der unterschiedlichen Einzelerfassungssysteme mehrfach. Die resultierende Qualität aus den erfassten Objektdaten wird erhöht, weil auch unsichere Aussagen aus einer Erfassung durch Hinzuziehen anderer unsicherer Aussagen aus einer oder mehreren weiteren Erfassungen verwertbar werden.

Anders ausgedrückt wird also derselbe Punkt des Fahrzeugs in einer Dimension mehrfach, aber auch in mehreren Dimensionen erfasst. Als Dimension wird in diesem Sinne eine Art einer Information, wie sie sich aus einer Eigenschaft des Fahrzeugs, wie beispielsweise aus einer geometrische Eigenschaft oder beispielsweise aus dem Vorliegen oder Nichtvorliegen einer Überlackierung, ergibt, verstanden.

Es werden zu einem Objektpunkt alle Objektdaten, mithin alle Informationen, zusammengefasst und dabei primäre Objektdaten (als Raumkoordinatendaten x, y, z sowie gesicherte Daten zu Eigenschaften) gebildet. Die primären Objektdaten und die auf den gleichen Objektpunkt bezogenen sekundären Objektdaten werden als mehrere Layer dargestellt, weshalb dies auch als Multi-Layer-Information bezeichnet werden kann. Jeder Layer beinhaltet Informationen unterschiedlicher Art. Jede Informationsart kann auch als eine Dimension bezeichnet werden, weshalb auch von einer mehrdimensionalen Erfassung, von mehrdimensionalen Informationen und oder einer mehrdimensionalen Darstellung gesprochen werden kann. Durch die Mehrdimensionaliät erhält der Betrachter oder bespielsweise eine Fahrzeugbewerter mehr Informationen als bei einer rein räumlichen Darstellung des Fahrzeugs.

Im Ergebnis der Fahrzeugerfassung wird als digitales Abbild mit mehreren Informationsarten bereitgestellt, so dass das digitale Abbild ausgebildet ist, einen digitalen Zwilling des erfassten Fahrzeugs darzustellen.

Das digitale Abbild als digitaler Zwilling ermöglicht es, dass das erfasste Fahrzeug auch in einem Vitual-Reality-Format, also in Virtueller Realität angesehen werden kann. Dies betrifft die Ebene der Maschine-Mensch-Kommunikation.

Das digitale Abbild als digitaler Zwilling ermöglicht es darüber hinaus, dass die in ihm aggregierten Informationen automatisiert, beispielsweise für eine Reparaturberechnung, weiterverarbeitet werden können. Dies betrifft die Maschine-Maschine-Kommunikation.

Gemäß einer vorteilhaften Weiterbildung weist das Fahrzeugzustandserfassungssystem eine Umhausung auf. Dabei ist die Fahrzeugpositionierungseinheit innerhalb der Umhausung angeordnet. Die Umhausung bewirkt insbesondere den Vorteil, dass definierte Lichtverhältnisse oder Infrarotstrahlungsverhältnisse bei den Erfassungsvorgängen erreicht werden können und insbesondere Störlichtquellen oder Störwärmequellen abgeschirmt werden. Damit kann vorteilhaft die Genauigkeit der erfassten Objektdaten erhöht werden. Zugleich wird die Umgebung und insbesondere das Personal vor Licht-, Wärme- oder Laserquellen der Einzelerfassungssysteme geschützt. Vorzugsweise kann die Umhausung zugleich ganz oder teilweise die Positionierungseinheit der Objekterfassungseinheit ausbilden und die Lagebeziehung der Einzelerfassungssysteme festlegen. Vorzugsweise ist auch die Objekterfassungseinheit innerhalb der Umhausung angeordnet.

In einer weiteren vorteilhaften Weiterbildung weist das Fahrzeugzustandserfassungssystem zusätzlich einen Unterflurscanner auf, wobei der Unterflurscanner ausgebildet ist, Objektdaten einer Fahrzeugunterseite zu erfassen und an die Auswertungseinheit zu übertragen und wobei die Objektdaten von der Auswertungseinheit in die Erzeugung des digitalen Abbilds einbezogen werden.

Dem liegt zugrunde, dass die Einzelerfassungssysteme so angeordnet sind, dass deren Erfassungsbereich von dem sich auf der Plattform drehenden Fahrzeug zwar die Fahrzeugoberseite, Fahrzeugvorderseite, die Fahrzeugrückseiten und die beiden seitlichen Fahrzeugseiten gut erfassen kann, aber die Fahrzeugunterseite nur bedingt erfassbar ist.

Durch den Unterflurscanner kann vorteilhaft auch der Zustand der Fahrzeugunterseite, auch als Unterboden bezeichnet, erfasst werden. Dies ist insofern vorteilhaft, als damit zum ersten generell eine höhere Aussagekraft der Fahrzeugzustandserfassung erreicht wird und zum zweiten auch funktionale Bauteile wie Teile der Auspuffanlage, der Radaufhängung und ähnliche Bauteile erfasst werden können, deren Zustand wesentlich für den Fahrzeugzustand und daraus abgeleitet für etwaige Reparaturbewertungen oder Fahrzeugbewertungen ist.

Gemäß einer weiteren vorteilhaften Weiterbildung weist das Fahrzeugerfassungssystem zusätzlich einen Reifenscanner auf, wobei mittels des Reifenscanners Objektdaten eines Reifens erfasst und an die Auswertungseinheit zur Einbeziehung in die Erzeugung des digitalen Abbilds zur Verfügung gestellt werden.

Mittels des Reifenscanners ist insbesondere der Profilzustand der Bereifung des Fahrzeugs erfassbar. Optional ist mittels des Reifenscanners auch ein Reifentyp erfassbar, so dass dann auch Aussagen zur Zulässigkeit der Bereifung möglich sind. Der Profilzustand ist ein zusätzlicher Parameter, der in eine Wertermittlung des Fahrzeugs eingeht. Zudem können Aussagen zur Restlaufzeit der Bereifung und damit dazu getroffen werden, wann eine Bereifungserneuerung durchzuführen ist.

Nach einer weiteren Weiterbildung weist das Fahrzeugzustandserfassungssystem zusätzlich einen Innenraumscanner auf. Der Innenraumscanner wird auch als Interieur-Scanner bezeichnet. Mittels des Innenraumscanners werden Objektdaten eines Innenraums des Fahrzeugs erfasst und an die Auswertungseinheit zur Einbeziehung in die Erzeugung des digitalen Abbilds zur Verfügung gestellt. Damit werden für das digitale Abbild zum einen die Farbgebung, zum anderen aber auch der Erhaltungszustand des Innenraums verfügbar.

Der Innenraumscanner kann dabei nach allen Erfassungsverfahren arbeiten, wie sie bei den Einzelerfassungssystemen der Objekterfassungseinheit erläutert sind, wie beispielsweise 3-D Kamera-Erfassungssystem, Bildkamera-Erfassungssystem oder Infrarot-Erfassungssystem. Insbesondere kann der Innenraumscanner mehrteilig ausgebildet sein und zugleich mehrere dieser Erfassungsverfahren anwenden. Die Objektpunkte, zu denen von dem Innenraumscanner Objektdaten erfasst werden, werden durch die Auswertungseinheit in das einheitliche Raumkoordinatensystem integriert.

Nach einer anderen Weiterbildung weist das Fahrzeugerfassungssystem ein Vergleichsmodul auf. Das Vergleichsmodul weist eine Datenbasis mit Daten zu einem normativen digitalen Abbild auf. Die Datenbasis kann als interne Datenbank oder auch als eine externe Datenbank vorliegen. Eine externe Datenbank ermöglicht als zusätzlichen Vorteil eine zentrale Datenpflege. Das normative digitale Abbild beschreibt ein typengleiches Fahrzeug, wie es dem originalen Herstellungszustand entspricht.

Das Vergleichsmodul ist ausgebildet, einen Vergleich zwischen dem digitalen Abbild und dem normativen Abbild durchzuführen und ein digitaltes Differenzabbild zu erzeugen. Das digitale Differenzabbild beschreibt, inwiefern der Zustand des Fahrzeugs, dessen Fahrzeugzustand erfasst wird, von dem originalen Herstellungszustand abweicht. Das digitale Differenzabbild weist somit insbesondere Beschädigungen aus. Somit kann beispielsweise eine Ausgabe als Schadensbericht erfolgen. Diese Fahrzeugszustandsinformationen können zudem eine Grundlage für Aussagen zu erforderlichen Reparaturen oder zu dem Wert des betreffenden Fahrzeugs sein.

Eine weitere Weiterbildung sieht vor, dass das Fahrzeugerfassungssystem ein Reparaturberechnungsmodul aufweist. Das Reparaturberechnungsmodul weist eine Datenbasis mit Reparaturdaten auf, wobei die Reparaturdaten Daten zu Ersatzteilen, zu Reparaturarbeitszeiten und zu Reparaturkosten aufweisen. Auch diese Datenbasis kann als interne Datenbank oder auch als eine externe Datenbank vorliegen.

Daten zu Ersatzteilen beinhalten, bei welcher Beschädigung welche Ersatzteile für eine Reparatur benötigt werden. Daten zu Reparaturarbeitszeiten beinhalten, welche Reparaturzeiten, in der Regel als Arbeitswerte bezeichnet, für die Durchführung einer Reparatur erforderlich sind. Daten zu Reparaturkosten geben an, zu welchen Preisen Ersatzteile und zu welchen Preisen Reparaturarbeitsleistungen verfügbar sind. Die Reparaturkosten sind in der Datenbasis daher vorzugsweise als Einheitspreise hinterlegt.

Das Reparaturberechnungsmodul ist ausgebildet, auf der Grundlage des digitalen Differenzabbilds und der Reparaturdaten eine Reparaturbewertung zu erstellen, wobei die Reparaturbewertung für eine Reparatur benötigte Ersatzteile, aufzuwendende Reparaturarbeitszeiten und Reparaturkosten aufweist.

Mittels dieser Weiterbildung ist es vorteilhaft möglich, automatisiert und manipulationssicher Aussagen zu erforderlichen Reparaturen und zu deren Kosten zu erlangen. Somit können automatisiert Kostenvoranschläge erstellt werden. Als Vorteil können somit erhebliche Personalkosten eingespart werden.

In einer vorteilhaften Weiterbildung hierzu ist es ferner möglich, auf der Grundlage der Reparaturbewertung automatisch Ersatzteilbestellungen auszulösen.

Nach einer weiteren Weiterbildung weist das Fahrzeugerfassungssystem ein Wertermittlungsmodul auf. Das Wertermittlungsmodul weist eine Datenbasis mit Fahrzeugpreisdaten auf. Es gilt auch hier, dass diese Datenbasis als interne Datenbank oder auch als eine externe Datenbank vorliegen kann.

Als Fahrzeugpreisdaten werden beispielsweise Listenpreise je nach Fahrzeugkonfiguration, Preistabellen in Abhängigkeit von Fahrzeugalter, Laufleistung, Anzahl der Vorbesitzer und etwaige zusätzliche Preisdaten verstanden.

Das Wertermittlungsmodul ist ausgebildet, auf der Grundlage der Fahrzeugpreisdaten, des digitalen Abbilds, des digitalen Differenzabbilds und der Reparaturdaten eine Fahrzeugwertermittlung zu erstellen. Je nach Fahrzeugzustand kann das digitale Differenzabbild auch ergeben, dass keine Reparaturen durchzuführen sind. Die Reparaturdaten liegen dann als Nullwert vor, so dass dadurch die Fahrzeugwertermittlung nicht beeinflusst wird. Gemäß dieser Weiterbildung steht vorteilhaft eine Lösung zur Bestimmung eines Handelswertes eines Fahrzeugs zur Verfügung, die automatisiert erfolgt und damit nur geringen Arbeitsaufwand erfordert, manipulationssicher ist und zuverlässig dokumentierbar ist.

Die Erfindung wird als Ausführungsbeispiel anhand von
- Fig. 1: Draufsicht in schematischer Darstellung
- Fig. 2: Blockschaltbild mit Reparaturberechnungsmodul und Wertermittlungsmodul
näher erläutert.

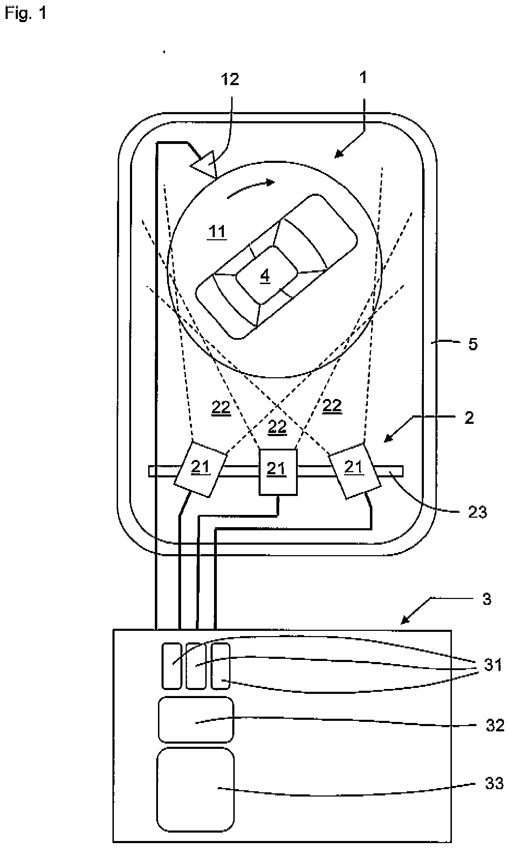

Fig. 1 zeigt ein erstes Ausführungsbeispiel eines erfindungsgemäßen Fahrzeugerfassungssystems.

Die Fahrzeugpositionierungseinheit 1 weist eine drehbare Plattform 11 auf, auf welche ein Fahrzeug 4 aufgefahren werden kann. Die Drehbarkeit der Plattform 11 ist durch den Pfeil veranschaulicht. Die Drehposition und damit die Winkelstellung der Plattform 11 wird durch die Plattformpositionserfassungseinheit 12 erfasst und an die Auswertungseinheit 3 übertragen.

Im Ausführungsbeispiel weist die Objekterfassungseinheit 2 drei Einzelerfassungssysteme 21, jeweils mit einem Erfassungsbereich 22, auf. Der Erfassungsbereich 22 ist so ausgerichtet, dass das auf der Plattform 11 befindliche Fahrzeug 4 davon umfasst wird. Im Ausführungsbeispiel überschneiden sich die Erfassungsbereiche 22. Die Einzelerfassungssysteme 21 sind an einer Positionierungseinheit 23, die als Gestell ausgebildet ist, starr montiert. Durch die starre Montage ist sichergestellt, dass nach erfolgter Kalibrierung alle von den Einzelerfassungssystemen erfassten Objektdaten zu Objektpunkten des Fahrzeugs einem einheitlichen Raumkoordinatensystem zuordenbar sind. Bei den Einzelerfassungssystemen 21 handelt es sich im Ausführungsbeispiel um eine 3-D-Kamera-Einheit, eine Bildkameraeinheit und eine Infrarot-Erfassungseinheit.

In einem gegenüber dem Ausführungsbeispiel nach Fig. 1 modifizierten besonders vorteilhaften Ausführungsbeispiel weist die Objekterfassungseinheit fünf Einzelerfassungseinheiten auf, wobei es sich um eine 3-D-Kamera-Einheit, eine Bildkameraeinheit, eine Infrarot-Erfassungseinheit, eine Deflektometrie-Erfassungseinheit und eine Musterlichtprojektions-Erfassungseinheit handelt.

In dem Ausführungsbeispiel nach Fig. 1 ist sowohl die Fahrzeugpositionierungseinheit 1 als auch die Objekterfassungseinheit 2 in dem Innenraum einer Umhausung 5 angeordnet. Diese weist eine verschließbare Öffnung (in Fig. 1 nicht dargestellt) auf, durch welche das Fahrzeug 4 in den Innenraum auf die Plattform 11 gefahren und nach erfolgter Erfassung wieder herausgefahren werden kann. Die Objekterfassungseinheit 2 weist im Ausführungsbeispiel ferner Mittel zur Beleuchtung des Fahrzeugs 4 mit definierter Lichtstärke und definierter Farbtemperatur auf, um die Präzision der Objektdaten zu erhöhen. Die Mittel zur Beleuchtung sind in Fig. 1 nicht dargestellt.

Ferner weist das Ausführungsbeispiel gemäß Fig. 1 eine Auswertungseinheit 3 auf. Bei der Auswertungseinheit 3 handelt es sich im Ausführungsbeispiel um ein Computersystem.

Dabei erhält jedes der drei Einzelbewertungsmodule 31 der Auswertungseinheit 3 die Objektdaten von dem jeweils zugeordneten Einzelerfassungssystem 21 der drei Einzelerfassungssysteme 21 über Datenleitungen. Sämtliche Datenleitungen zur Auswertungseinheit 3 von den Einzelerfassungssystemen 21 und von der Plattformpositionserfassungseinheit 12 sind ohne Bezugszeichen dargestellt. Die Einzelbewertungsmodule 21 führen eine Bewertung der Qualität der Objektdaten durch. Dazu ist ein Qualitätswert der Erfassungsqualität voreingestellt. Erreichen die Objektdaten den eingestellten Qualitätswert oder überschreiten sie ihn, werden die Objektdaten als verwertbare Objektdaten vorkategorisiert und an das Gesamtbewertungsmodul 32 weiter übertragen. Erreichen die Objektdaten den eingestellten Qualitätswert nicht, werden die Objektdaten als nicht verwertbare Objektdaten vorkategorisiert und nicht weitergeleitet. Hierdurch wird es ermöglicht, dass nur ausreichend zuverlässige Objektdaten in das später zu bildende digitale Abbild eingehen, so dass auch das digitale Abbild einen hohen Zuverlässigkeitsgrad aufweist.

In dem Gesamtbewertungsmodul 32 werden anhand der Koordinatendaten zu den Objektpunkten die verwertbaren Objektdaten einander zugeordnet. Dieser Zuordnung liegt zu Grunde, dass der Auswertungseinheit 3 durch die definierte Position der Einzelerfassungssysteme 21 mittels der Positionierungseinheit 23 und der mittels der Plattformpositionserfassungseinheit 12 bekannten Winkelposition der Plattform 11 und damit des aufgestellten Fahrzeugs 4 eine Zuordnung zu einem einheitlichen Raumkoordinatensystem für alle Einzelerfassungssysteme 21 möglich ist. Nach erfolgter Zuordnung wird durch das Gesamtbewertungsmodul 32 ein Vergleich des Qualitätswertes der verwertbaren Objektdaten eines jeden der Einzelerfassungssysteme 21 mit denen der anderen Einzelerfassungssysteme 21 durchgeführt. Im Ergebnis das Vergleichs werden die verglichenen verwertbaren Objektdaten nach dem Rang kategorisiert. Die Objektdaten mit dem höchsten Qualitätswert erhalten den höchsten Rang. Die Objektdaten mit dem höchsten Rang werden als primäre Objektdaten kategorisiert. Die Objektdaten mit niedrigerem Rang werden als sekundäre Objektdaten kategorisiert.

Die primären und die sekundären Objektdaten werden an das Generierungsmodul 33 übertragen. Das Generierungsmodul ordnet die Koordinatendaten aus den Objektdaten der Einzelerfassungsysteme 21 unter Einbeziehung der Plattformpositionsdaten einem einheitlichen Raumkoordinatensystem zu. Ferner wird auf der Grundlage der primären Objektdaten zunächst ein digitales Basisabbild des Fahrzeugs 4 in dem einheitlichen Raumkoordinatensystem erzeugt. Das digitale Basisabbild des Fahrzeugs 4 wird dann durch Hinzufügung der sekundären Objektdaten anhand der Koordinatendaten zu einem digitalen Abbild des Fahrzeugs 4 ergänzt. Dieses digitale Abbild wird dann ausgebbar bereitgestellt. Im Ausführungsbeispiel wird das digitale Abbild als Datei übertragen.

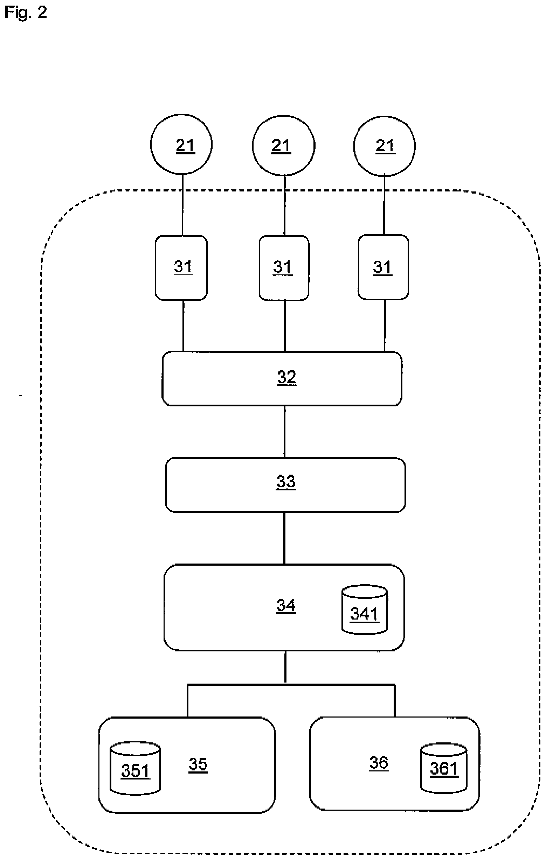

Fig. 2 zeigt ein weiteres Ausführungsbeispiel in einer Darstellung als Blockschaltbild, wobei hier sowohl eine Reparaturbewertung als auch eine Wertermittlung durchführbar ist.

Für die Erfassungseinheiten 21, die Einzelbewertungsmodule 31, das Gesamtbewertungsmodul 32 und das Generierungsmodul 33 gelten in entsprechender Weise die Erläuterungen zu dem Ausführungsbeispiel gemäß Fig.1.

Nachdem das digitale Abbild durch das Generierungsmodul 33 erzeugt wurde, wird es in dem Ausführungsbeispiel gemäß Fig. 2 an ein Vergleichsmodul 34 übertragen. Das Vergleichsmodul 34 enthält eine Datenbasis 341 als Datenbank mit Daten zu normativen digitalen Abbildern vieler Fahrzeugmodelle in unterschiedlichen Ausstattungen, wobei auch das normative Abbild des erfassten Fahrzeugs 4 enthalten ist. Diese Datenbank wird regelmäßig um neu auf dem Markt erscheinende Fahrzeugmodelle ergänzt. Das Vergleichsmodul 34 erkennt anhand des digitalen Abbilds das Fahrzeugmodell des erfassten Fahrzeugs 4 und nimmt einen Vergleich zwischen dem digitalen Abbild des erfassten Fahrzeugs 4, das es von dem Generierungsmodul 33 erhalten hat, und dem normativen Abbild des entsprechenden Modells, dass es der Datenbasis 341 entnommen hat, vor und erzeugt ein digitaltes Differenzabbild. Das digitale Differenzabbild enthält die Informationen über Abweichungen des erfassten Fahrzeugs 4 von einem original hergestellten Fahrzeug, so dass insbesondere Beschädigungen erkennbar sind.

Das digitale Differenzabbild wird sowohl dem Reparaturbewertungsmodul 35 als auch parallel dem Wertermittlungsmodul 36 zur Verfügung gestellt.

Das Reparaturberechnungsmodul 35 verfügt über eine Datenbasis 351 mit Reparaturdaten. Bei den Reparaturdaten handelt es sich um modellbezogene Daten zu Ersatzteilen, zu Reparaturarbeitszeiten und zu Reparaturkosten, wobei die Reparaturkosten als Einheitspreise hinterlegt sind. Auf der Grundlage des digitalen Differenzabbilds und der Reparaturdaten bestimmt das Reparaturbewertungsmodul, welche Ersatzteile für eine Reparatur benötigt werden und welche Reparaturarbeitszeiten aufzuwenden sind sowie welche Reparaturkosten gemäß den hinterlegten Einheitspreisen anfallen und gibt dies als Reparaturbewertung aus.

Kumulativ oder alternativ kann mittels des Wertermittlungsmoduls 36 der Handelswert des erfassten Fahrzeugs 4 bestimmt werden.

Das Wertermittlungsmodul 36 weist hierzu eine Datenbasis 361 mit Fahrzeugpreisdaten auf. Die Fahrzeugpreisdaten enthalten insbesondere Daten zu Listenpreisen und alters- sowie laufleistungsabhängigen Marktpreisen vieler Fahrzeugmodelle, wobei auch Daten zu dem Modell des erfassten Fahrzeugs 4 enthalten sind. Auf der Grundlage der Fahrzeugpreisdaten, des digitalen Differenzabbilds und der Reparaturdaten erstellt das Wertermittlungsmodul 36 eine Fahrzeugwertermittlung. Optional können über das digitale Abbild und das digitale Differenzabbild auch ergänzende Fahrzeugdaten, wie beispielsweise die Anzahl der Vorbesitzer, manuell eingegeben und von dem Wertermittlungsmodul 36 bei der Erstellung der Fahrzeugwertermittlung berücksichtigt werden.

### Verwendete Bezugszeichen

- 1: Fahrzeugpositionierungseinheit
- 11: Plattform
- 12: Plattformpositionserfassungseinheit
- 2: Objekterfassungseinheit
- 21: Einzelerfassungssystem
- 22: Erfassungsbereich
- 23: Positionierungseinheit
- 3: Auswertungseinheit
- 31: Einzelbewertungsmodul
- 32: Gesamtbewertungsmodul
- 33: Generierungsmodul
- 34: Vergleichsmodul
- 341: Datenbasis des Vergleichsmoduls
- 35: Reparaturberechnungsmodul
- 351: Datenbasis des Reparaturberechnungsmoduls
- 36: Wertermittlungsmodul
- 361: Datenbasis des Wertermittlungsmoduls
- 4: Fahrzeug
- 5: Umhausung

## Patentansprüche

1. Fahrzeugzustanderfassungssystem,
aufweisend eine Fahrzeugpositionierungseinheit (1), eine Objekterfassungseinheit (2) und eine Auswertungseinheit (3),
wobei die Fahrzeugpositionierungseinheit eine Plattform (11) und eine Plattformpositionserfassungseinheit (12) aufweist, wobei die Plattform (11) ausgebildet ist, ein Fahrzeug (4) hierauf aufzustellen, wobei die Plattform (11) rotierbar um eine Vertikalachse des aufgestellten Fahrzeugs (4) ist, und
wobei die Plattformpositionserfassungseinheit (12) ausgebildet ist, Plattformpositionsdaten zu erfassen und diese ah die Auswertungseinheit (3) übertragbar bereitzustellen,
wobei die Objekterfassungseinheit (2) eine Anzahl von mindestens zwei Einzelerfassungssystemen (21) aus einer Gruppe bestehend aus:
- 3-D Kamera-Erfassungssystem
- Bildkamera-Erfassungssystem
- Infrarot-Erfassungssystem
- Lasertriangulation-Erfassungssystem
- Musterlichtprojektion-Erfassungssystem
- Deflektometrie-Erfassungssystem
aufweist,
wobei jedes Einzelerfassungssystem (21) einen Erfassungsbereich (22) aufweist, wobei der Erfassungsbereich (22) zumindest abschnittsweise das Fahrzeug (4) umfasst
eine Positionierungseinheit (23), welche eine Lagebeziehung der Einzelerfassungssysteme zueinander und zu der Fahrzeugpositionierungseinheit festlegt,
wobei mittels jedem der mindestens zwei Einzelerfassungssysteme Objektdaten von Objektpunkten des Fahrzeugs (4) erfassbar und an die Auswertungseinheit übertragbar bereitstellbar sind, wobei die Objektdaten Koordinatendaten der Objektpunkte enthalten
wobei die Auswertungseinheit (3) Einzelbewertungsmodule (31) für jedes der mindestens zwei Einzelerfassungssysteme (21), ein Gesamtbewertungsmodul (32) und ein Generierungsmodul (33) aufweist,
wobei durch jedes Einzelbewertungsmodul (31) eine Bewertung einer Erfassungsqualität der Objektdaten und auf der Grundlage der Bewertung eine Vorkategorisierung als verwertbare Objektdaten bei einem Erreichen eines einstellbaren Qualitätswertes der Erfassungsqualität und als nicht verwertbare Objektdaten bei einer Unterschreitung des Qualitätswertes durchführbar ist und verwertbare Objektdaten an das Gesamtbewertungsmodul (32) übertragbar bereitstellbar sind,
wobei durch das Gesambewertungsmodul (32) anhand der Koordinatendaten zu den Objektpunkten die verwertbaren Objektdaten einander zuordenbar sind, wobei ein Vergleich des Qualitätswertes der verwertbaren Objektdaten eines Einzelerfassungssystems (21) mit dem Qualitätswert der verwertbaren Objektdaten eines weiteren Einzelerfassungssystems (21) durchführbar ist, wobei eine Rangkategorisierung der verwertbaren Objektdaten der Einzelerfassungssysteme (21) in Abhängigkeit von dem Qualitätswert als primäre Objektdaten und als sekundäre Objektdaten durchführbar ist,
wobei das Generierungsmodul (33) ausgebildet ist, die Koordinatendaten aus den Objektdaten der Einzelerfassungsysteme (21) unter Einbeziehung der Plattformpositionsdaten einem einheitlichen Raumkoordinatensystem zuzuordnen, auf der Grundlage der primären Objektdaten ein digitales Basisabbild des Fahrzeugs (4) in dem einheitlichen Raumkoordinatensystem zu erzeugen, das digitale Basisabbild des Fahrzeugs (4) durch Hinzufügung der sekundären Objektdaten anhand der Koordinatendaten zu einem digitalen Abbild des Fahrzeugs zu ergänzen und das digitale Abbild ausgebbar bereitzustellen.

2. Fahrzeugerfassungssystem nach Anspruch 1,
**dadurch gekennzeichnet,**
**dass** das Fahrzeugerfassungssystem eine Umhausung (5) aufweist, wobei die Fahrzeugpositionierungseinheit (1) innerhalb der Umhausung (5) a ngeordnet ist.

3. Fahrzeugerfassungssystem nach einem der vorhergehenden Ansprüche,
**dadurch gekennzeichnet,**
**dass** das Fahrzeugerfassungssystem zusätzlich einen Unterflurscanner aufweist, wobei mittels des Unterflurscanners Objektdaten einer Fahrzeugunterseite erfasst und an die Auswertungseinheit zur Einbeziehung in die Erzeugung des digitalen Abbilds zur Verfügung gestellt werden.

4. Fahrzeugerfassungssystem nach einem der vorhergehenden Ansprüche,
**dadurch gekennzeichnet,**
**dass** das Fahrzeugerfassungssystem zusätzlich einen Reifenscanner aufweist, wobei mittels des Reifenscanners Objektdaten eines Reifens des Fahrzeugs erfasst und an die Auswertungseinheit zur Einbeziehung in die Erzeugung des digitalen Abbilds zur Verfügung gestellt werden.

5. Fahrzeugerfassungssystem nach einem der vorhergehenden Ansprüche,
**dadurch gekennzeichnet,**
**dass** das Fahrzeugerfassungssystem zusätzlich einen Innenraumscanner aufweist, wobei mittels des Innenraumscanners Objektdaten eines Innenraums des Fahrzeugs erfasst und an die Auswertungseinheit zur Einbeziehung in die Erzeugung des digitalen Abbilds zur Verfügung gestellt werden.

6. Fahrzeugerfassungssystem nach einem der vorhergehenden Ansprüche,
**dadurch gekennzeichnet,**
**dass** das Fahrzeugerfassungssystem ein Vergleichsmodul (34) aufweist, wobei das Vergleichsmodul (34) eine Datenbasis mit Daten zu einem normativen digitalen Abbild aufweist, wobei das Vergleichsmodul (34) ausgebildet ist, einen Vergleich zwischen dem digitalen Abbild und dem normativen Abbild durchzuführen und ein digitaltes Differenzabbild zu erzeugen.

7. Fahrzeugerfassungssystem nach Anspruch 6,
**dadurch gekennzeichnet,**
**dass** das Fahrzeugerfassungssystem ein Reparaturberechnungsmodul (35) aufweist, wobei das Reparaturberechnungsmodul (35) eine Datenbasis mit Reparaturdaten aufweist, wobei die Reparaturdaten Daten zu Ersatzteilen, zu Reparaturarbeitszeiten und zu Reparaturkosten aufweisen, wobei das Reparaturberechnungsmodul (35) ausgebildet ist, auf der Grundlage des digitalen Differenzabbilds und der Reparaturdaten eine Reparaturbewertung zu erstellen, wobei die Reparaturbewertung für eine Reparatur benötigte Ersatzteile, aufzuwendende Reparaturarbeitszeiten und Reparaturkosten aufweist.

8. Fahrzeugerfassungssystem nach einem der vorhergehenden Ansprüche 6 und 7,
**dadurch gekennzeichnet,**
**dass** das Fahrzeugerfassungssystem ein Wertermittlungsmodul (36) aufweist, wobei das Wertermittlungsmodul (36) eine Datenbasis mit Fahrzeugpreisdaten aufweist und wobei das Wertermittlungsmodul (36) ausgebildet ist, auf der Grundlage der Fahrzeugpreisdaten, des digitalen Differenzabbilds und der Reparaturdaten eine Fahrzeugwertermittlung zu erstellen.

## Claims

1. Vehicle state detection system,
comprising a vehicle positioning unit (1), an object detection unit (2) and an evaluation unit (3),
wherein the vehicle positioning unit has a platform (11) and a platform position detection unit (12), wherein the platform (11) is designed to place a vehicle (4) thereon, wherein the platform (11) is rotatable about a vertical axis of the placed vehicle (4), and wherein the platform position detection unit (12) is-designed to detect platform position data and to provide these data in a manner transmittable to the evaluation unit (3),
wherein the object detection unit (2) comprises a number of at least two individual detection systems (21) from a group consisting of:
- 3D camera detection system
- image camera detection system
- infrared detection system
- laser triangulation detection system
- pattern light projection detection system
- deflectometry detection system,
wherein each individual detection system (21) has a detection area (22), wherein the detection area (22) covers at least sections of the vehicle (4), a positioning unit (23) which defines a positional relation of the individual detection systems to each other and to the vehicle positioning unit, wherein by means of each of the at least two individual detection systems, object data of object points of the vehicle (4) are detectable and providable in a manner transmittable to the evaluation unit, wherein the object data contain coordinate data of the object points,
wherein the evaluation unit (3) comprises individual evaluation modules (31) for each of the at least two individual detection systems (21), an overall evaluation module (32) and a generation module (33),
wherein by means of each individual evaluation module (31) an evaluation of a detection quality of the object data and, on the basis of the evaluation, a precategorization as usable object data can be performed when an adjustable quality value of the detection quality is achieved and as nonusable object data when the quality value falls below the adjustable quality value, and usable object data can be provided in a manner transmittable to the overall evaluation module (32),
wherein the usable object data can be assigned to one another by the overall evaluation module (32) using the coordinate data for the object points, wherein a comparison of the quality value of the usable object data of an individual detection system (21) with the quality value of the usable object data of a further individual detection system (21) can be performed, wherein a ranking categorization of the usable object data of the individual detection systems (21) can be performed as primary object data and as secondary object data depending on the quality value,
wherein the generation module (33) is configured to assign the coordinate data from the object data of the individual detection systems (21) including the platform position data to a uniform spatial coordinate system on the basis of the primary object data, to supplement the digital basic image of the vehicle (4) by adding the secondary object data on the basis of the coordinate data to form a digital image of the vehicle, and to provide the digital image in a manner capable of being output.

2. Vehicle detection system according to claim 1,
**characterized in that**
the vehicle detection system comprises a housing (5), wherein the vehicle positioning unit (1) is located inside the housing (5).

3. Vehicle detection system according to one of the preceding claims,
**characterized in that**
the vehicle detection system additionally features an underfloor scanner such that object data of a vehicle's bottom side are detected by means of the underfloor scanner and made available to the evaluation unit for being included when generating the digital image.

4. Vehicle detection system according to one of the preceding claims,
**characterized in that**
the vehicle detection system additionally features a tire scanner such that object data of a vehicle's tire are detected by means of the tire scanner and made available to the evaluation unit for being included when generating the digital image.

5. Vehicle detection system according to one of the preceding claims,
**characterized in that**
the vehicle detection system additionally features an interior equipment scanner such that object data of the vehicle's passenger compartment are detected by means of the interior equipment scanner and made available to the evaluation unit for being included when generating the digital image.

6. Vehicle detection system according to one of the preceding claims,
**characterized in that**
the vehicle detection system features a comparison module (34), the comparison module (34) comprising a database with data relating to a normative digital image, the comparison module (34) being designed to perform a comparison between the digital image and the normative image and to generate a digital difference image.

7. Vehicle detection system according to claim 6,
**characterized in that**
the vehicle detection system comprises a repair calculation module (35), the repair calculation module (35) comprising a database with repair data, the repair data comprising data on spare parts, on repair working hours and on repair costs, the repair calculation module (35) being designed to generate a repair evaluation on the basis of the digital difference image and the repair data, the repair evaluation comprising spare parts required for a repair, repair working hours to be spent and repair costs.

8. Vehicle detection system according to one of the preceding claims 6 and 7,
**characterized in that**
that the vehicle detection system comprises a value assessment module (36), wherein the value assessment module (36) comprises a database with vehicle price data and wherein the value assessment module (36) is designed to generate a vehicle evaluation on the basis of the vehicle price data, the digital difference image and the repair data.

## Revendications

1. Système de détection d'état de véhicule,
présentant une unité de positionnement de véhicule (1), une unité de détection d'objet (2) et une unité d'évaluation (3),
dans lequel l'unité de positionnement de véhicule comporte une plateforme (11) et une unité de détection de position de plateforme (12), dans lequel la plateforme (11) est conçue pour y placer un véhicule (4), dans lequel la plateforme (11) est rotative autour d'un axe vertical du véhicule (4) placé, et dans lequel l'unité de détection de position de plateforme (12) est conçue pour détecter des données de position de plateforme et les mettre à disposition de manière transmissible à l'unité d'évaluation (3),
dans lequel l'unité de détection d'objet (2) comprend un certain nombre d'au moins deux systèmes de détection individuels (21) choisis dans un groupe constitué d'un:
- système de détection de caméra 3D
- système de détection à appareil photographiqe
- système de détection à infrarouge
- système de détection à triangulation laser
- système de détection à projection de lumière à motif
- système de détection à déflectométrie,
dans lequel chaque système de détection individuel (21) présente une zone de détection (22), la zone de détection (22) comprenant le véhicule (4) au moins par sections,
une unité de positionnement (23) qui détermine une relation de position des systèmes de détection individuels les uns par rapport aux autres et par rapport à l'unité de positionnement de véhicule,
dans lequel des données d'objet de points d'objet du véhicule (4) peuvent être saisies au moyen de chacun des au moins deux systèmes de saisie individuels et peuvent être mises à disposition de manière transmissible à l'unité d'évaluation, les données d'objet contenant des données de coordonnées des points d'objet,
dans lequel l'unité d'évaluation (3) comporte des modules d'évaluation individuels (31) pour chacun des au moins deux systèmes de détection individuels (21), un module d'évaluation global (32) et un module de génération (33),
dans lequel une évaluation d'une qualité de détection des données d'objet peut être effectuée par chaque module d'évaluation individuel (31) et, sur la base de l'évaluation, une pré-catégorisation peut être réalisée en tant que données d'objet utilisables lorsqu'une valeur de qualité réglable de la qualité de détection est atteinte et en tant que données d'objet non utilisables lorsque la valeur de qualité n'est pas atteinte, et des données d'objet utilisables peuvent être mises à disposition de manière transmissible au module d'évaluation global (32),
dans lequel les données d'objet utilisables pouvant être attribuées les unes aux autres par le module d'évaluation global (32) à l'aide des données de coordonnées relatives aux points d'objet, dans lequel une comparaison de la valeur de qualité des données d'objet utilisables d'un système de détection individuel (21) avec la valeur de qualité des données d'objet utilisables d'un autre système de détection individuel (21) peut être effectuée, dans lequel une catégorisation par ordre de priorité des données d'objet utilisables des systèmes de détection individuels (21) peut être effectuée en tant que données d'objet primaires et en tant que données d'objet secondaires en fonction de la valeur de qualité,
dans lequel le module de génération (33) est conçu pour associer les données de coordonnées provenant des données d'objet des systèmes de détection individuels (21), en tenant compte des données de position de plateforme, à un système de coordonnées spatiales uniforme, pour produire, sur la base des données d'objet primaires, l'image de base numérique du véhicule (4) dans le système de coordonnées spatiales uniforme, pour compléter l'image de base numérique du véhicule (4), en ajoutant les données d'objet secondaires sur la base des données de coordonnées à l'image numérique du véhicule et pour fournir et transmettre l'image numérique.

2. Système de détection de véhicule suivant la revendication 1 est **caractérisé en ce**
**que** le système de détection de véhicule présente un boîtier (5), l'unité de positionnement de véhicule (1) étant disposée à l'intérieur du boîtier (5).

3. Système de détection de véhicule suivant l'une quelconque des revendications précédentes
est **caractérisé en ce**
**que** le système de détection de véhicule présente en plus un scanner sous le véhicule, dans lequel des données d'objet d'une face inférieure du véhicule sont détectées au moyen du scanner sous le véhicule et mises à disposition à l'unité d'évaluation pour être intégrées dans la génération de l'image numérique.

4. Système de détection de véhicule suivant l'une quelconque des revendications précédentes
est **caractérisé en ce**
**que** le système de détection de véhicule présente en plus un scanner de pneus, dans lequel des données d'objet d'un pneu du véhicule sont détectées au moyen du scanner de pneus et mises à disposition à l'unité d'évaluation pour être intégrées dans la génération de l'image numérique.

5. Système de détection de véhicule suivant l'une quelconque des revendications précédentes
est **caractérisé en ce**
**que** le système de détection de véhicule présente en plus un scanner d'intérieur, dans lequel des données d'objet d'un espace intérieur du véhicule sont détectées au moyen du scanner d'intérieur et mises à disposition à l'unité d'évaluation pour être intégrées dans la génération de l'image numérique.

6. Système de détection de véhicule suivant l'une quelconque des revendications précédentes
est **caractérisé en ce**
**que** le système de détection de véhicule comporte un module de comparaison (34), le module de comparaison (34) présentant une base de données avec des données relatives à une image numérique normative, le module de comparaison (34) étant conçu pour effectuer une comparaison entre l'image numérique et l'image normative et pour générer une image numérique différentielle.

7. Système de détection de véhicule suivant la revendication 6 est **caractérisé en ce**
**que** le système de détection de véhicule comporte un module de calcul de réparation (35), le module de calcul de réparation (35) présentant une base de données avec des données de réparation, les données de réparation présentant des données sur des pièces de rechange, sur des temps de travail de réparation et des coûts de réparation, le module de calcul de réparation (35) étant conçu pour établir une évaluation de réparation sur la base de l'image différentielle numérique et des données de réparation, l'évaluation de réparation présentant des pièces de rechange nécessaires pour une réparation, des temps de travail de réparation à dépenser et des coûts de réparation.

8. Système de détection de véhicule suivant l'une quelconque des revendications précédentes 6 et 7
est **caractérisé en ce**
**que** le système de détection de véhicule comporte un module de détermination de valeur (36), le module de détermination de valeur (36) présentant une base de données avec des données de prix de véhicule et le module de détermination de valeur (36) étant conçu pour établir une détermination de valeur de véhicule sur la base des données de prix de véhicule, de l'image numérique de différence et des données de réparation.
